# FASCICULE DE BREVET EUROPEEN

(11) **EP 0 659 631 B1**
(45) Date de publication et mention de la délivrance du brevet: **14.05.1997**
(21) Numéro de dépôt: 94402961.0
(22) Date de dépôt: 20.12.1994
(51) Int. Cl.: B62D 21/15

(54) **Structure avant de véhicule automobile et véhicule équipé de cette structure**
Vorderes Tragwerk für ein Kraftfahrzeug und Kraftfahrzeug mit diesem Tragwerk
Front structure of a motor car and motor car equipped with this structure

(30) Priorité: 22.12.1993 FR 9315492
(43) Date de publication de la demande: 28.06.1995
(73) Titulaire: AUTOMOBILES PEUGEOT, 75116 Paris (FR); AUTOMOBILES CITROEN, 92200 Neuilly-sur-Seine (FR)
(72) Inventeur: Charant, André, F-92240 Malakoff (FR)
(74) Mandataire: Thinat, Michel

(56) Documents cités:
- EP-A- 0 397 544
- DE-A- 2 137 517
- DE-A- 2 450 763
- FR-A- 2 053 884
- FR-A- 2 178 342
- FR-A- 2 439 124
- US-A- 4 763 948

## Description

La présente invention concerne une structure avant de véhicule automobile à traction avant, en particulier de véhicule à moteur électrique, et un véhicule équipé de cette structure.

On connaît déjà une structure avant de véhicule automobile comportant un brancard constitué de deux longerons symétriques par rapport au plan médian du véhicule et reliés par une traverse , les extrémités avant des longerons étant courbées et relevées pour supporter les éléments de façade du véhicule et les attaches du moteur situées latéralement et au niveau de son centre de gravité.

Une telle structure présente de nombreux inconvénients, et en particulier lors d'un choc avant, les longerons ont tendance à fléchir et à endommager l'habitacle du véhicule.

La présente invention a donc pour but d'éliminer les inconvénients précités et de proposer une structure avant de véhicule automobile qui présente une capacité d'absorption des chocs élevée, une structure simplifiée et qui permet de préserver l'intégrité de l'habitacle du véhicule, notamment dans le cas d'un choc frontal.

A cet effet, la présente invention a pour objet une structure avant de véhicule automobile, notamment à moteur électrique, comportant un brancard principal solidaire de l'habitacle du véhicule et constitué de deux longerons principaux symétriques par rapport au plan médian du véhicule et reliés par une traverse principale, le véhicule comportant une transmission et une suspension avant constituée notamment d'un bras de suspension, caractérisée en ce que lesdits longerons principaux sont droits, passent sous l'habitacle du véhicule et supportent à leur extrémité avant des attaches latérales du moteur ainsi que des articulations internes de chaque bras de suspension.

L'invention prévoit donc une structure avant profilée de fabrication plus simple que les structures actuellement connues, car elle élimine le cintrage des extrémités avant des longerons.

Selon une caractéristique particulièrement avantageuse de l'invention, la structure avant comporte un brancard supérieur solidaire du brancard principal et constitué de deux longerons supérieurs dont les extrémités avant sont reliées par une traverse avant qui ne supporte que le radiateur, les projecteurs et/ou le pare-chocs du véhicule.

Cette caractéristique permet de dissocier les éléments de structure solidaires de l'habitacle du véhicule, à savoir le brancard principal, des autres éléments de structure susceptibles de subir un choc frontal, à savoir le brancard supérieur.

La dissociation de la structure avant en un brancard supérieur et un brancard principal permet à la fois d'améliorer la capacité d'absorption des chocs de la structure avant grâce au brancard supérieur et de préserver l'intégrité de l'habitacle du véhicule qui, lui, est positivement relié au brancard principal.

Selon une autre caractéristique de l'invention, chaque longeron supérieur est fixé par son extrémité arrière à la traverse principale, et un tirant vertical relie l'extrémité avant de chaque longeron principal au longeron supérieur correspondant.

Selon encore une autre caractéristique de l'invention, les articulations internes des bras de suspension sont montées à l'avant sur le tirant vertical précité et à l'arrière sur une équerre fixée sur chaque longeron principal.

La traverse principale est éventuellement courbée à ses extrémités latérales et présente une concavité orientée vers l'arrière du véhicule, lesdites extrémités latérales étant reliées aux pieds de porte du véhicule et la partie centrale de ladite traverse principale étant fixée, de préférence par soudure, aux longerons principaux au niveau des équerres précitées qui supportent les articulations internes et arrières des bras de suspension.

L'écartement des deux longerons principaux peut être sensiblement égal à l'écartement des attaches du moteur de sorte que ces dernières sont fixées à l'extrémité avant des longerons principaux qui est profilée en forme de U.

Les longerons principaux sont avantageusement biseautés à leur extrémité avant supérieure pour permettre le passage de la transmission, notamment en cas de choc frontal.

Selon une autre caractéristique de l'invention, les longerons supérieurs sont reliés à des moyens amortisseurs de chocs par l'intermédiaire de portiques de support.

Selon encore une autre caractéristique de l'invention, l'écartement des longerons principaux est inférieur à celui des longerons supérieurs de manière à permettre éventuellement l'escamotage des longerons supérieurs, notamment en cas de choc avant.

Le brancard supérieur peut constituer une structure absorbante de chocs, formée par exemple de plis, de moyens élastiques et/ou en un matériau léger déformable.

La présente invention vise également un véhicule automobile équipé d'une structure avant suivant l'une quelconque des caractéristiques mentionnées ci-dessus.

L'invention sera mieux comprise et d'autres buts, caractéristiques, détails et avantages de celle-ci apparaîtront plus clairement au cours de la description explicative qui va suivre d'un mode de réalisation particulier, actuellement préféré de l'invention, donné uniquement à titre d'exemple illustratif et non limitatif, en référence aux dessins schématiques annexés, dans lesquels:

La figure 1 est une vue schématique en élévation latérale et en coupe de la structure avant de l'invention, suivant la ligne I-I de la figure 2.

La figure 2 est une demi-vue schématique de dessus, en coupe et partiellement arrachée de la structure avant de la figure 1, suivant la ligne II-II de la figure 3.

La figure 3 est une demi-vue schématique en élévation frontale et en coupe de la structure avant de la figure 1, suivant la ligne III-III de celle-ci.

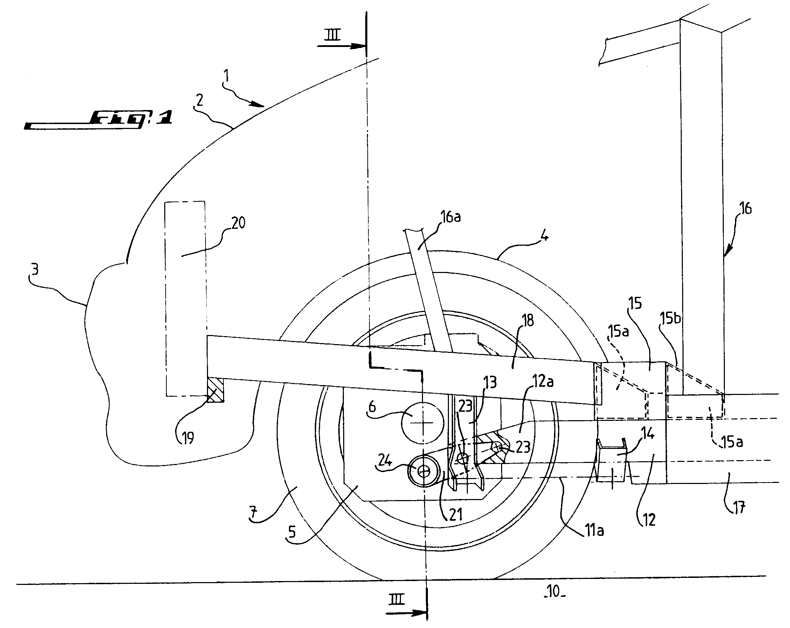

Suivant l'exemple de réalisation représenté sur la figure 1, la structure avant de l'invention est montée sur un véhicule automobile 1 qui comporte un capot 2, un pare-chocs avant 3 et une aile avant 4.

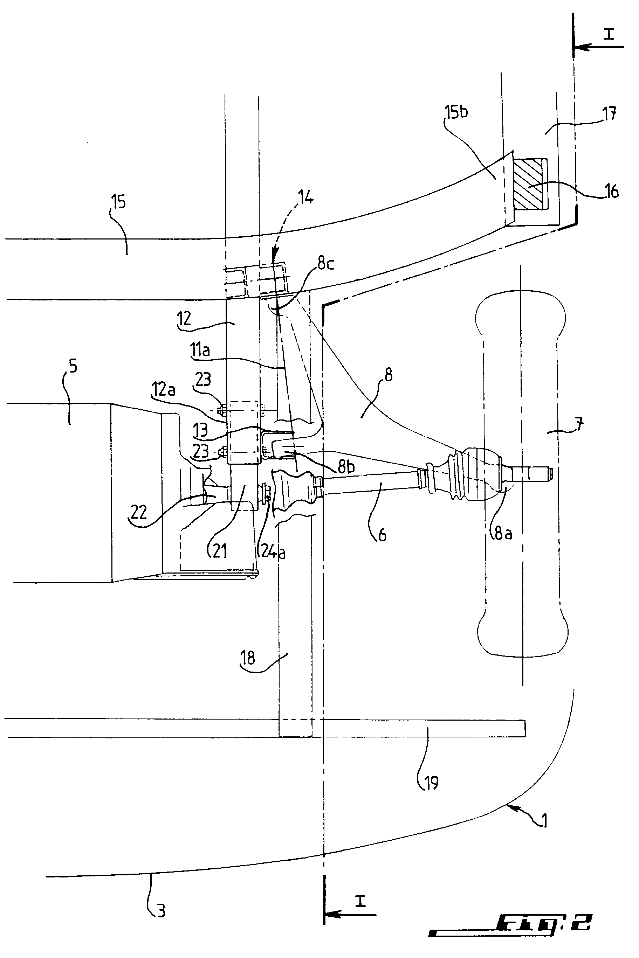

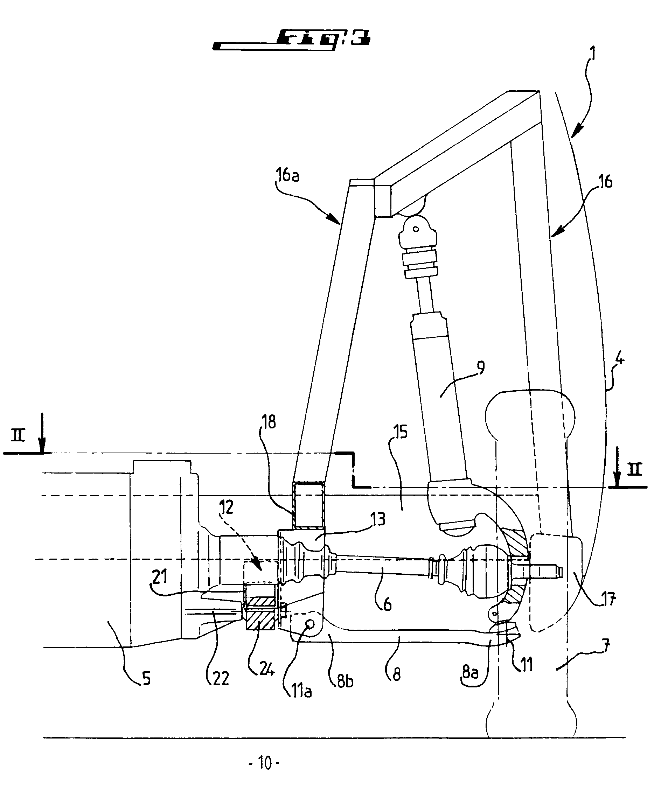

Le véhicule 1 comporte également un moteur 5 qui est relié, par l'intermédiaire d'une liaison homocinétique à joints de cardan 6 formant la transmission avant du véhicule, à des paliers (non représentés) de support de roue 7 (voir figures 2 et 3).

On voit sur la figure 3 une suspension avant constituée notamment d'un triangle ou bras de suspension inférieur 8 et d'une jambe télescopique supérieure 9 d'amortissement de chocs, chaque suspension avant étant articulée par rapport à une roue 7 qui repose sur le sol 10.

Chaque bras de suspension 8 est articulé à son extrémité externe 8a sur l'extrémité inférieure de la jambe télescopique 9 autour d'une rotule 11, et à ses extrémités internes avant 8b et arrière 8c sur un longeron principal tubulaire 12 autour d'un axe 11a.

Les extrémités internes avant 8b et arrière 8c des bras de suspension 8 sont articulées sur les longerons principaux 12 respectivement par l'intermédiaire de tirants verticaux 13 et d'équerres 14 qui sont fixés sur les parois latérales externes des longerons principaux 12.

Les deux longerons principaux 12 sont symétriques par rapport au plan médian du véhicule 1, reliés par une traverse principale 15 et constituent le brancard principal de la structure avant de l'invention.

On voit sur les figures 1 et 3 que les longerons principaux 12 sont droits et passent sous la carcasse de l'habitacle 16 du véhicule 1.

La traverse principale 15 est réalisée de préférence d'un seul tenant pour assurer une meilleure résistance aux chocs. Elle est creuse, courbée, comporte une section transversale 15a trapézoïdale et présente une concavité orientée vers l'arrière du véhicule 1.

La partie centrale de la traverse 15 est fixée, par exemple par des boulons ou de préférence par soudure, sur la face supérieure des longerons principaux tubulaires 12.

Les extrémités latérales 15b de la traverse principale 15 sont reliées à des longerons formant pieds de porte 17 du véhicule 1.

Des longerons supérieurs tubulaires 18, reliés à leurs extrémités avant par une traverse avant 19, constituent un brancard supérieur solidaire du brancard principal.

La traverse avant 19 est destinée à ne supporter que le radiateur, les projecteurs (représentés sur la figure 1 par un bloc 20) et/ou le pare-chocs avant 3 du véhicule 1.

Chaque longeron tubulaire supérieur 18 est fixé par son extrémité arrière à la partie centrale de la traverse principale 15, ladite extrémité arrière étant de préférence en appui sur celle-ci.

Un tirant vertical 13 relie l'extrémité avant 12a de chaque longeron principal 12 au longeron supérieur 18 correspondant.

La traverse principale 15 sert d'appui au brancard supérieur qui peut être différent quant à sa section, son inertie et sa matière constitutive, du brancard principal, de manière à augmenter la capacité d'absorption des chocs du brancard supérieur.

On voit sur la figure 3 que les longerons supérieurs 18 sont reliés à la carcasse de l'habitacle 16 par l'intermédiaire de portiques 16a sur lesquels est articulée l'extrémité supérieure de chaque jambe télescopique 9 formant moyen amortisseur de chocs.

Les brancards principal et supérieur peuvent être éventuellement reliés par des tôles supplémentaires, pour rigidifier et augmenter l'inertie de l'ensemble.

L'extrémité avant 12a de chaque longeron principal 12 est biseautée sur sa face supérieure pour permettre le passage de la transmission 6, en particulier lors d'un choc avant.

La fixation du moteur 5 sur les longerons principaux 12 s'effectue par l'intermédiaire de supports 21 et par des attaches 22 qui font saillie latéralement du moteur 5.

Chaque support 21 est fixé sur l'extrémité avant 12a du longeron principal 12 par l'intermédiaire de boulons ou de vis 23 et présente une partie cylindrique dans laquelle se trouve une articulation élastique emmanchée 24 reliée à une attache 22 du moteur 5 par une vis 24a.

Un des boulons 23 peut également servir à la fixation du tirant vertical 13 sur le longeron principal 12.

L'écartement des longerons principaux 12 est sensiblement égal à l'écartement des attaches 22 du moteur 5.

Toutefois, si les écartements précités diffèrent, on peut disposer les supports 21 latéralement par rapport aux longerons principaux 12.

On voit clairement sur la figure 2 que l'écartement des longerons principaux 12 est strictement inférieur à celui des longerons supérieurs 18 de manière à permettre par exemple l'escamotage des longerons supérieurs en cas de choc avant ou frontal.

On a omis de représenter sur la figure 1 le bras de suspension 8 par souci de clarté.

Bien que l'invention ait été décrite en liaison avec un mode de réalisation particulier, il est évident qu'elle n'y est nullement limitée, qu'on peut lui apporter de nombreuses variantes et modifications sans pour autant sortir de son cadre et de son esprit.

## Revendications

1. Structure avant de véhicule automobile, notamment à moteur électrique, comportant un brancard principal solidaire de l'habitacle du véhicule et constitué de deux longerons principaux (12) symétriques par rapport au plan médian du véhicule (1), et reliés par une traverse principale (15) , le véhicule comportant une transmission (6) et une suspension avant constituée notamment d'un bras de suspension (8), caractérisée en ce que lesdits longerons principaux (12) sont droits, passent sous l'habitacle (16) du véhicule (1) et supportent à leur extrémité avant (12a) des attaches latérales (22) du moteur (5) ainsi que des articulations internes (8b) de chaque bras de suspension (8).

2. Structure avant selon la revendication 1, caractérisée en ce qu'elle comporte un brancard supérieur (18,19) solidaire du brancard principal (12,15) et constitué de deux longerons supérieurs (18) dont les extrémités avant sont reliées par une traverse avant (19) qui ne supporte que le radiateur, les projecteurs (20) et/ou le pare-chocs (3) du véhicule (1).

3. Structure avant selon la revendication 2, caractérisée en ce que chaque longeron supérieur (18) est fixé par son extrémité arrière à la traverse principale (15) et en ce qu'un tirant vertical (13) relie l'extrémité avant (12a) de chaque longeron principal (12) au longeron supérieur (18) correspondant.

4. Structure avant selon la revendication 3, caractérisée en ce que les bras de suspension (8) sont articulés à leur extrémité interne avant (8b) sur les tirants verticaux (13).

5. Structure avant selon la revendication 3 ou 4, caractérisée en ce que les bras de suspension (8) sont articulés à leur extrémité interne arrière (8c) sur une équerre (14) fixée sur chaque longeron principal (12).

6. Structure avant selon la revendication 5, caractérisée en ce que la traverse principale (15) est courbée à ses extrémités latérales (15b) et présente une concavité orientée vers l'arrière du véhicule (1), lesdites extrémités latérales (15b) étant reliées aux pieds de porte (17) du véhicule et la partie centrale de ladite traverse principale (15) étant fixée, de préférence par soudure, aux longerons principaux (12), au niveau des équerres (14).

7. Structure avant selon l'une quelconque des revendications précédentes, caractérisée en ce que l'écartement des deux longerons principaux (12) est sensiblement égal à l'écartement des attaches (22) du moteur (5) de sorte que ces dernières sont fixées à l'extrémité avant (12a) des longerons principaux (12) qui est profilée en forme de U.

8. Structure avant selon l'une quelconque des revendications précédentes, caractérisée en ce que les longerons principaux (12) sont biseautés à leur extrémité avant supérieure (12a) pour permettre le passage de la transmission (6), notamment en cas de choc frontal.

9. Structure avant selon l'une quelconque des revendications 2 à 8, caractérisée en ce que les longerons supérieurs (18) sont reliés à des moyens amortisseurs de chocs (9) par l'intermédiaire de portiques de support (16a).

10. Structure avant selon l'une quelconque des revendications 2 à 9, caractérisée en ce que l'écartement des longerons principaux (12) est inférieur à celui des longerons supérieurs (18).

11. Structure avant selon l'une quelconque des revendications 2 à 10, caractérisée en ce que le brancard supérieur (18,19) constitue une structure absorbante de chocs, formée par exemple de plis, de moyens élastiques et/ou en un matériau léger déformable.

12. Véhicule automobile équipé d'une structure avant suivant l'une quelconque des revendications précédentes.

## Claims

1. Front structure of an automotive vehicle in particular with an electric motor, comprising a main beam made fast to the passenger compartment of the vehicle and consisting of two main longitudinal members (12) symmetrical with respect to the middle plane of the vehicle (1) and connected by a main cross-member (15), the vehicle comprising a transmission (6) and a front suspension consisting in particular of a suspension arm (8), characterized in that the said main longitudinal members (12) are straight, extend underneath the passenger compartment (16) of the vehicle (1) and support at their forward end (12a) side attachments (22) of the motor (5) as well as internal pivotal connections (8b) of each suspension arm (8).

2. Front structure according to claim 1, characterized in that it comprises an upper beam (18, 19) made fast to the main beam (12, 15) and consisting of two upper longitudinal members (18) the forward ends of which are connected by a front cross-member (19) which only supports the radiator, the headlights (20) and/or the bumper (3) of the vehicle (1).

3. Front structure according to claim 2, characterized in that each upper longitudinal member (18) is fastened with its rear end to the main cross-member (15) and in that a vertical bracket (13) connects the forward end (12a) of each main longitudinal member (12) to the corresponding upper longitudinal member (18).

4. Front structure according to claim 3, characterized in that the suspension arms (8) are pivotally connected with their internal front end (8b) onto the vertical brackets (13).

5. Front structure according to claim 3 or 4, characterized in that the suspension arms (8) are pivotally connected with their internal rear end (8c) onto a right-angle bracket (14) fastened onto each main longitudinal member (12).

6. Front structure according to claim 5, characterized in that the main cross-member (15) is curved at its side ends (15b) and exhibits a concavity facing the rear of the vehicle (1), the said side ends (15b) being connected to the door feet (17) of the vehicle and the central portion of the said main cross member (15) being fastened preferably through welding to the main longitudinal members (12) at the level of the right-angle brackets (14).

7. Front structure according to any one of the foregoing claims, characterized in that the spacing of two main longitudinal members (12) is substantially equal to the spacing of the attachments (22) of the motor (5) so that the latter are fastened to the front end (12e) of the main longitudinal members (12) which has a U-shaped profile.

8. Front structure according to any one of the foregoing claims, characterized in that the main longitudinal members (12) are bevelled at their upper front end (12a) to allow the passage of the transmission (6) in particular in the case of a frontal impact.

9. Front structure according to any one of claims 2 to 8, characterized in that the upper longitudinal members (18) are connected to shock damping means (9) through the medium of supporting gantries (16a).

10. Front structure according to any one of claims 2 to 9, characterized in that the spacing of the main longitudinal members (12) is lower than that of the upper longitudinal members (18).

11. Front structure according to any one of claims 2 to 10, characterized in that the upper beam (18, 19) constitutes a shock absorbing structure formed for example of folds, of elastic means and/or made from a deformable light material.

12. Automotive vehicle fitted with a front structure according to any one of the foregoing claims.

## Patentansprüche

1. Vorderaufbau eines Kraftfahrzeuges insbesondere mit elektrischem Motor, mit einem mit dem Fahrgastraum des Fahrzeuges fest verbundenen Hauptbalken, der aus zwei in bezug auf die Mittelebene des Fahrzeuges (1) symmetrischen und durch eine Hauptquerstrebe (15) verbundenen Hauptlängsträgern (12) besteht, wobei das Fahrzeug eine Kraftübertragung (6) und eine insbesondere aus einem Aufhängungsarm (8) bestehende Vorderaufhängung aufweist, dadurch gekennzeichnet, daß die besagten Hauptlängsträger (12) geradlinig sind, unter dem Fahrgastraum (16) des Fahrzeuges (1) verlaufen und an ihrem Vorderende (12a) Seitenhalterungsanschlüße (22) des Motors (5), sowie innere Gelenke (8b) jedes Aufhängungsarmes (8) tragen.

2. Vorderaufbau gemäß Anspruch 1, dadurch gekennzeichnet, daß er einen oberen mit dem Hauptbalken (12, 15) fest verbundenen oberen Balken (18, 19) aufweist, der aus zwei oberen Längsträgern (18) besteht, deren Vorderenden durch eine Vorderquerstrebe (19), die nur den Kühler, die Scheinwerfer (20) und/oder die Stoßstange (3) des Fahrzeuges (1) trägt, verbunden sind.

3. Vorderaufbau gemäß Anspruch 2, dadurch gekennzeichnet, daß jeder obere Längsträger (18) mit seinem hinteren Ende an der Hauptquerstrebe (15) befestigt ist und daß eine senkrechte Strebe (13) das Vorderende (12a) jedes Hauptlängsträgers (12) mit dem entsprechenden oberen Längsträger (18) verbindet.

4. Vorderaufbau gemäß Anspruch 3, dadurch gekennzeichnet, daß die Aufhängungsarme (8) mit ihrem vorderen Innenende (8b) an den senkrechten Streben (13) angelenkt sind.

5. Vorderaufbau gemäß Anspruch 3 oder 4, dadurch gekennzeichnet, daß die Aufhängungsarme (8) mit ihrem hinteren Innenende (8c) an einem an jedem Hauptlängsträger (12) befestigten Winkel (14) angelenkt sind.

6. Vorderaufbau gemäß Anspruch 5, dadurch gekennzeichnet, daß die Hauptquerstrebe (15) an ihren Seitenenden (15b) gebogen ist und eine dem hinteren Teil des Fahrzeuges (1) zugewandte Konkavität aufweist, wobei die besagten Seitenenden (15b) mit den Türfüßen (17) des Fahrzeuges verbunden sind und der Zentralabschnitt der besagten Hauptquerstrebe (15) an den Hauptlängsträgern (12) im Bereich der Winkel (14) vorzugsweise durch Schweißung befestigt ist.

7. Vorderaufbau gemäß irgendwelchem der vorangehenden Ansprüche, dadurch gekennzeichnet, daß der Abstand zwischen den beiden Hauptlängsträgern (12) etwa dem Abstand der Halterungsanschlüße (22) des Motors (5) etwa gleich ist, so daß die letzteren an dem Vorderende (12a) der Hauptlängsträger (12), das ein U-förmiges Profil aufweist, befestigt sind.

8. Vorderaufbau nach irgendeinem der vorangehenden Ansprüche, dadurch gekennzeichnet, daß die Hauptlängsträger (12) an ihrem oberen Vorderende (12a) abgeschrägt sind, um den Durchgang der Kraftübertragung (6) insbesondere im Falle eines stirnseitigen Zusammenstoßes zu gestatten.

9. Vorderaufbau nach irgendeinem der Ansprüche 2 bis 8, dadurch gekennzeichnet, daß die oberen Längsträger (18) mit Stoßdämpfungsmitteln (9) über Portaltraggerüste (16a) verbunden sind.

10. Vorderaufbau nach irgendeinem der Ansprüche 2 bis 9, dadurch gekennzeichnet, daß der Abstand zwischen den Hauptlängsträgern (12) kleiner als derjenige der oberen Längsträger (18) ist.

11. Vorderaufbau nach irgendeinem der Ansprüche 2 bis 10, dadurch gekennzeichnet, daß der obere Balken (18, 19) einen z.B. durch Falten, elastische Mittel und/oder aus einem leichten verformbaren Werkstoff gebildeten Stöße aufnehmenden Aufbau bildet.

12. Mit einem Vorderaufbau nach irgendeinem der vorangehenden Ansprüche ausgerüstetes Kraftfahrzeug.
